# NEUE EUROPÄISCHE PATENTSCHRIFT

(11) **EP 0 089 589 B2**
(45) Veröffentlichungstag und Bekanntmachung des Hinweises auf die Entscheidung über den Einspruch: **21.09.1994**
(45) Hinweis auf die Patenterteilung: 15.04.1987
(21) Anmeldenummer: 83102456.7
(22) Anmeldetag: 12.03.1983
(51) Int. Cl.: H01B 3/44, C08L 27/06

(54) **Verwendung einer weichmacherhaltigen Kunststoffmischung für elektrische Isolierschichten**
Use of a plasticised polymer blend for electrical insulation
Utilisation d'un mélange de polymères plastifiés pour isolation électrique

(30) Priorität: 15.03.1982 DE 3209362
(43) Veröffentlichungstag der Anmeldung: 28.09.1983
(73) Patentinhaber: Kabelwerke Reinshagen GmbH, D-42369 Wuppertal (DE)
(72) Erfinder: Halbach, Sebulon, D-5600 Wuppertal 21 (DE); Möller, Horst, Dipl.-Ing., D-5600 Wuppertal 17 (DE)
(74) Vertreter: Priebisch, Rüdiger, Dipl.-Ing., Dipl.-Wirtsch.-Ing. (FH)

(56) Entgegenhaltungen:
- EP-A- 0 003 747
- DE-A- 1 569 573
- DE-A- 2 911 650
- DE-B- 1 101 551
- DE-B- 1 195 946
- FR-A- 2 220 849
- US-A- 3 502 611
- US-A- 4 154 892
- CHEMICAL ABSTRACTS, Band 94, Nr. 18, 4. Mai 1981, Seite 49, Nr. 140793b, Columbus, Ohio, USA, YU.K. KABALYAN et al.: "Plastics for the cable industry"
- Taschenbuch der Kunststoff-Additive, Carl Hauser Verlag, München, Wien 1979, Seite 360
- Kunststoff-Handbuch, Band II, 1963, S. 475-477,480
- International Wire and Cable Symposium, Dez. 1972, Vortrag über "New high temperature, flame-resistant, thermoplastic PVC wire insulation", S. 111-123
- Encyclopedia of PVC, 1977, Vol. 2, Marcel Dekker Inc., S. 736-737
- Wire Journal, Mai 1974, S. 77-80
- Vinyl and Allied Polymers, Vol. 2, The Plastics Institute, 1972, S. 119-120
- Kunststoffe, Bd. 49, 1959, Heft 12, S. 679
- Japanische Patentanmeldung 78/73 688, Jap. Kokai Nr. 80/01 020; Derwent Abstracts, Section A, 09.04.80, Nr. 11780C/07
- Taschenbuch der Kunststoff-Additive, 1979, S. 339, 510, 511
- Kunststoffe, 1975, Heft 11, S. 13,14

## Beschreibung

Verwendung einer weichmacherhaltigen Kunststoffmischung für elektrische Isolierschichten von Leitungen.

Die Erfindung betrifft die Verwendung einer Kunststoffmischung für vernetzbare Isolierschichten von auf Reibung beanspruchten elektrischen Leitungen auf der Basis von Polyvinylchlorid und/oder dessen Copolymeren oder auf der Basis von Mischungen von Polyvinylchlorid und/oder dessen Copolymeren mit anderen Polymeren, die Weichmacher enthält und evtl. Verarbeitungshilfsmittel, wie Wachse, oder Stabilisatoren oder Farbstoffe, sowie Talkum.

Der Artikel "Plastics for the cable industry" von Yu K. Kabalyan, R.M. Adamyan und K.O. Altunyan, (USSR) in Prom - st. Arm 1980, (10), Seiten 33-35, der in Chemical Abstracts, Band 94, Nr. 18. 4. Mai 1981, Seite 49, Nr. 140 793 b, Columbus, Ohio, USA, zusammengefaßt ist, behandelt eine Reihenuntersuchung, bei der der Anteil an Talkum in PVC im Bereich 10 bis 70 Volumenteilen variiert ist, um den Einfluß auf die Bruchdehnung festzustellen. Der Gehalt an Weichmacher ist nicht angegeben, es wird nur darauf hingewiesen, daß handelsübliches PVC untersucht wurde.

Aus dem Taschenbuch der Kunststoff-Additive, Carl HanserVerlag, München, Wien, 1979, Seite 360, sind PVC-Mischungen für Kabelmäntel mit 40 bis 60 Gewichtsteilen Weichmacher auf 100 Gewichtsteilen PVC bekannt.

Bekanntlich weisen weichmacherhaltige Kunststoffisolierungen von elektrischen Leitungen und dergleichen einen schlechten Reibbeiwert auf. Das bedeutet, daß das Verhältnis Auflagekraft zu Verschiebekraft, bezogen auf Metalle, sehr hoch liegt. Es kann bis zu dem Wert 1 gehen. Hervorgerufen wird dieser Effekt offensichtlich dadurch, daß die Weichmacher zumindest in kleinen Mengen außen auf der Kunststoffisolierung aufliegen und eine Klebe- oder Haftwirkung verursachen. Die Folgen sind bei elektrischen Flachleitungen durch die DE-A-29 11 650 bekannt geworden.

Nicht rutschende flexible elektrische Leitungen führen in der praktischen Anwendung öfters zu Schwierigkeiten. So werden zum Beispiel beim Bügeln die elektrischen Bügeleisenzuleitungen über den Bügeltisch oder über die zu bügelnde Wäsche geführt. Eine schlecht rutschende flexible Bügeleisenzuleitung führt nun dazu, daß die Leitung zum einen auf dem Bügeltisch schleift und somit eine größere Bügelkraft aufzuwenden ist; zum anderen neigt eine solche Leitung dazu, an bzw. auf der zu bügelnden Wäsche zu haften und diese bei der Bügelbewegung mitzunehmen. Ein solches Verhalten ist unerwünscht und lästig.

Weiterhin kann es bei den bekannten elektrischen Leitungstrommeln, zum Beispiel bei Staubsaugern, zu Störungen dadurch kommen, daß beim Aufwickeln der Staubsaugerzuleitung die zweite Lage der Leitung sich auf der ersten Lage aufbaut ; das heißt, die zweite Lage der Wicklung legt sich nicht neben die erste, sondern wickelt sich auf die erste auf, so daß die Wicklung siehe ungleichmäßig oder asymmetrisch wird. Ein solcher unerwünschter Wickelaufbau kann zu Störungen beim Auf- bzw. Abwickeln der Staubsaugerzuleitung oder einer ähnlichen Leitung führen.

Es ist bekannt, das Klebe- oder Rutschverhalten einer flachen elektrischen Kunststoffleitung dadurch zu verbessern, daß ein Muster mit geringen Vertiefungen oder Erhöhungen in der Oberfläche des Isoliermantels vorgesehen wird, vergleiche die Deutsche Patentanmeldung DE-A-29 11 650. Ein solcher Aufbau hat zur Folge, daß die aufliegende Oberfläche verringert und der Hafteffekt weitgehend aufgehoben ist. Jedoch ist ein weiterer Arbeitsgang erforderlich.

Weiterhin ist vorgeschlagen worden, eine Bügeleisenleitung oder dergleichen mit einer vernetzbaren Isolierschicht und mit einem wärmebeständigen Lack zu überziehen, vergleiche die DE-A-28 07 406. Die Gleiffähigkeit der Leitung kann durch diese Maßnahme erhöht werden, jedoch werden durch den zweiten Arbeitsgang bei der Herstellung erhebliche zusätzliche Fertigungskosten verursacht.

Es ist des weiteren bekannt, füllstoffhaltige PVC-Schichten für elektrische Kabel mittels Elektronenstrahlen zu vernetzen, siehe Wire Journal, Mai 1974, Seiten 77 bis 80.

Aus der DE-B-11 01 551 ist es bekannt, die Adern einer hochflexiblen, mehradrigen, elektrischen Leitung in ein pulverförmiges Trockengleitmittel, wie z. B. Talkum, einzubetten. Auch hier ist ein zusätzlicher Arbeitsgang erforderlich. Dieser Vorschlag beschränkt sich zudem auf eine innere Puderung einer elektrischen Leitung, die nur durch den schützenden Mantel möglich wird.

Schließlich zeigt die Chemische Rundschau, 24. Jahrgang, 18. Aug. 1971, Nr. 33, Seite 731 die Verwendung von Gleitmitteln in Polyvinylchlorid-Mischungen. Diese Gleitmittel dienen zur Oberflächenverbesserung und sollen als Verarbeitungshilfsmittel das Kleben an Metallflächen der Verarbeitungsmaschinen verhindern ; hierzu werden Waschse und dergleichen angeführt.

Aufgabe der Erfindung ist es, einen Weg zu zeigen, der ohne prinzipiellen Eingriff in die bekannten Fertigungsverfahren, insbesondere des Extrudierens, bei weichmacherhaltigen Kunststoffmischungen für elektrische Leitungen mit einem Polyvinylchloridanteil eine verbesserte Gleitfähigkeit der Kunststoffschicht erreicht. Diese Gleitfähigkeit bezieht sich insbesondere auf das Gleiten von verschiedenen Abschnitten der Isolierschicht aufeinander oder auf das Gleiten der Isolierschicht auf einem anderen Teil, zum Beispiel einer Unterlage, einer Führung oder dergleichen, oder auf das Gleiten von zwei gleichartigen Isolierschichten aufeinander, wie zum Beispiel von elektrischen Adern innerhalb eines Leitungsmantels.

Gelöst wird diese Aufgabe durch die Maßnahme, daß die Mischung mittels Elektronenstrahlen vernetzbar und frei von Kreide ist und daß auf ein Teil Weichmacher 0,25 bis 0,5 Teile Talkum zugesetzt sind. Der Anteil an Talkum zur Erzielung der Gleitfähigkeit hängt also entscheidend davon ab, wieviel Weichmacheranteile die PVC-Mischung aufweist. Verwendet werden übliche Weichmacher, wie Dioctylphtalat, Di-Iso-Decylphtalat, Trimellitatester, Dioctylsebazat und/oder Polymerweichmacher, wie Polyadipat, Polysebazat und/oder Pulverweichmacher, wie Polyurethan.

Eine Vorteilhafte Mischungsangabe ist in dem Unteranspruch 2 angegeben.

Die Erfindung bringt den Vorteil, daß die Zumischung an sich kostengünstiger Zuschlagstoffe aufwendige und somit teure Operationen, wie Bepudern, Strukturieren oder Lackieren, erspart. Die herkömmlichen Fertigungsmethoden brauchen nicht geändert zu werden, es treten keine Kostenerhöhungen ein. Weiterhin kann derverminderte Reibbeiwert, der sich auch bei der Reibung zwischen zwei Kunststofflagen erreichen läßt, dazu ausgenutzt werden, bei beweglichen elektrischen Leitungen das innere Gleiten von Adern und Mantel aufeinander zu verbessern.

## Patentansprüche

1. Verwendung einer Kunststoffmischung für vernetzbare Isolierschichten von auf Reibung beanspruchten elektrischen Leitungen auf der Basis von Polyvinylchlorid und/oder dessen Copolymeren oder auf der Basis von Mischungen von Polyvinylchlorid und/oder dessen Copolymeren mit anderen Polymeren, die Weichmacher enthält und evtl. Verarbeitungshilfsmittel, wie Washse, oder Stabilisatoren oder Farbstoffe, sowie Talkum,
dadurch gekennzeichnet, daß die Mischung mittels Elektronenstrahlen vernetzbar und daß auf ein Teil Weichmacher 0,25 bis 0,5 Teile Talkum zugesetzt sind.

2. Verwendung nach Anspruch 1, gekennzeichnet durch folgende Zusammensetzung:
100 Teile Polyvinylchlorid-Pulver
100 Teile flüssiger Weichmacher
25 Teile Talkum
8 Teile Vernetzungshilfsmittel.

## Claims

1. Use of a plastics mixture for cross-linkable insulating layers for electrical leads which are subject to friction, on the basis of polyvinyl chloride and/or copolymers thereof or on the basis of mixtures of polyvinyl chloride and/or copolymers thereof with other polymers, the mixture containing plasticizers and, where appropriate, processing agents, such as waxes or stabilisers or dyes, and talc, characterised in that the mixture can be cross-linked using electron beams and is free from chalk, and in that 0.25 to 0.5 parts of talc are added to one part of plasticizer.

2. Use in accordance with claim 1, characterised by the following composition:
100 parts polyvinyl chloride powder
100 parts liquid plasticizer
25 parts talc
8 parts processing agents.

## Revendications

1. Utilisation d'un mélange de matières plastiques pour couches isolantes réticulables de conducteurs électriques sollicités en friction à base de chlorure de polyvinyle et/ou de leurs copolymères ou à base de mélanges de chlorure de polyvinyle et/ou de leurs copolymères avec d'autres polymères, qui contient des plastifiants et, le cas échéant, des produits auxiliaires de façonnage ou de transformation tels que des cires ou des stabilisants ou des colorants, tels que du talc, caractérisée en ce que le mélange est réticulable au moyen de faisceaux d'électrons et en ce qu'il est exempt de craie et en ce que l'on ajoute 0,25 à 0,5 partie de talc par partie de plastifiant.

2. Utilisation selon la revendication 1, caractérisée par la composition suivante :
100 parties de poudre de chlorure de polyvinyle
100 parties d'un plastifiant fluide
25 parties de talc
8 parties d'un agent auxiliaire de réticulation.
